# EUROPEAN PATENT APPLICATION

(11) **EP 3 321 874 A1**
(43) Date of publication of application: **16.05.2018**
(21) Application number: 16198267.3
(22) Date of filing: 10.11.2016
(51) Int. Cl.: G06Q 30/06, G07F 17/00, G06Q 20/32, G07F 17/10, G06Q 20/14

(54) **SYSTEM AND METHOD FOR PROCESSING A RENTAL OF A SECURED ASSET**

(71) Applicant: Mastercard International Incorporated, Purchase NY 10577 (US)
(72) Inventor: SHORTT, Aaron, Kildare (IE); MIEDZIEJEWSKI, Adam, Dublin (IE)
(74) Representative: Gill Jennings & Every LLP

(57) **Abstract**

The present disclosure relates to a method of initiating release of an asset which is secured with a lock, the lock being operated by a network terminal station capable of receiving data from the electronic device. An identification code associated with the asset is received. The identification code and payment data associated with a primary payment account to a server for authorization of a rental of the asset. In response to a successful authorization, an asset unlock code is received from the server. The asset unlock code is provided to the network terminal station so that the network terminal station opens the lock in order to unlock the asset for use by a renter.

## Description

The present disclosure relates to a system and method for processing a rental using a mobile device, to release an asset which is secured. In particular, one aspect relates to processing a rental transaction to release a bicycle as part of a publicly accessible cycle hire scheme.

### Background

Automated systems are known for facilitating the rental of assets without the requirement of a human vendor. Examples of such systems are used for cycle hire schemes in major cities around the world. For example, according to some schemes, a number of docking stations are provided throughout a city. Each of the docking stations comprises a number of docking ports that are capable of receiving and securing bicycles associated with the scheme. At any one time, a number of the docking ports can be empty and thus available for receiving a bicycle. The remainder of the docking ports hold a secured bicycle which may be released for use by a renter who successfully initiates a rental transaction.

In order to rent a bicycle using this type of scheme, a renter makes an initial payment at a docking station terminal using a payment card, typically either a debit or credit card. The docking station terminal returns a paper slip including a printed bicycle release code and an indication of the docking port it should be used with. The renter then keys in the bicycle release code into a button pad interface associated with a single docking port. The docking port then releases its secured bicycle for use by the renter. When the bicycle is returned to a docking port (not necessarily the same docking port from which the bicycle was originally released, or even the same docking station), the payment card used to make the payment is charged with a total amount calculated in accordance with the terms of the scheme.

According to another type of scheme, the renter makes a card payment and selects a bicycle from a main docking station terminal before pressing an unlocking button at the appropriate docking port to unlock the selected bicycle.

One disadvantage of the above types of schemes is that the bicycle release process is time consuming and inconvenient for the renter. The initial payment card payment must be made at a first location (the initial docking station terminal); the renter must wait for the printed code to be provided at the docking station terminal or select an available bicycle; the renter must then enter the printed code to a second location (a docking port). As a single docking station terminal is associated with several docking ports, a bottleneck may form as a number of renters attempt to retrieve an access code from the same docking station. Furthermore, the minimum time required to initiate a rental transaction is limited by the requirement for a renter to have to interact with both a docking station terminal and a docking port.

A further disadvantage of the above systems is that the renter is required to use a payment card to perform the rental transaction. The payment card details are provided to the operator of the cycle scheme system. In the event of a security breach, the payment card details could become known to a malicious third party who could use them to perform unauthorized transactions.

### Summary of invention

According to a first aspect of the present disclosure, there is provided a method, performed by an electronic device, of initiating release of an asset which is secured with a lock, the lock being operated by a network terminal station capable of receiving data from the electronic device, the method comprising: receiving an identification code associated with the asset; providing the identification code and payment data associated with a primary payment account to a server for authorization of a rental of the asset; receiving, in response to a successful authorization, an asset unlock code from the server; providing the asset unlock code to the network terminal station so that the network terminal station opens the lock in order to unlock the asset for use by a renter.

The above features provide a method in which an electronic device can advantageously identify an asset to be rented, initiate a payment for a rental of the asset, and initiate the release of the asset from a lock. This method is advantageous over previously known methods for several reasons. One advantage of the method is reducing bottlenecks in systems where a number of users would be required to access a shared payment terminal to input payment information for a plurality of asset rentals. Another advantage of the method is that the identification of the asset, the payment of the asset and the release of the asset are integrated. This removes the requirement for intermediate steps to link these processes together and similarly removes the requirement for a technical infrastructure to provide intermediate steps. For example, the need to provide a docking station having means for issuing a printed code is removed.

In a second aspect, there is provided a method, performed by a network terminal station, of initiating release of an asset which is secured with a lock, the method comprising: receiving an asset unlock code from a mobile device, the asset unlock code identifying the asset that is secured by the lock and providing confirmation that a rental of the asset has been authorized, and sending an unlock signal to the lock instructing the lock to open in order to release the asset.

In a third aspect, there is provided a network terminal station comprising at least one communication node configured to communicate with an electronic device and further configured to communicate with at least one lock in order to initiate the release of an asset secured by the lock; and a processor configured to perform steps comprising: receiving an asset unlock code from a mobile device, the asset unlock code identifying the asset that is secured by the lock and providing confirmation that a rental of the asset has been authorized, and sending an unlock signal to the lock instructing the lock to open in order to release the asset.

### Brief description of figures

Embodiments of the present disclosure will now be described, by way of nonlimiting example only, with reference to the accompanying drawings, in which:
Figure 1 is a schematic diagram of an example system for performing a rental transaction;
Figure 2 is a schematic diagram of an example system for performing a rental transaction, wherein the system comprises a plurality of locks;
Figure 3 is a flow diagram of steps in an exemplary method for processing a rental of a secured asset; and
Figure 4 is a schematic diagram of a mobile device arranged to perform steps for processing a rental of a secured asset.

### Detailed description of exemplary preferred embodiments

According to one aspect, the present disclosure provides a method for processing a release and rental of a lock-secured asset, which allows quick and efficient retrieval of the asset as well as simple and secure payment for the rental transaction.

In one example, the asset to be rented is a bicycle. A renter may initiate a rental by tapping their mobile device on a portion of an NFC enabled bicycle or docking port.

The mobile device is equipped to make and receive payments. This may be done by using, for example, the Apple Pay™ system. Such systems allow a user to link a mobile device with a payment card in order to make and receive payments.

In one example of such a system, the MasterCard Digital Enablement Service (MDES) is used to make payments using a mobile device linked with a MasterCard payment card. The MasterCard payment card is linked to a mobile device by the provision of a payment token. When a payment is made from the mobile device, the payment token is provided in order to identify the payment account from which funds are to be withdrawn. During the validation of the transaction, the MDES maps the payment token onto the primary account number (PAN) of the payment card with which the mobile device is linked. As the payment token that is used to perform the transaction is only converted into a payment card PAN at the MDES, the payment token can be locked for use in a single channel. For instance, the MDES may only be authorized to allow payment transactions from the token to a given recipient, thus reducing the possibility of the payment token being used fraudulently by a third party.

It is it be understood that the description of a mobile device that is linked with a MasterCard payment card using the MDES is illustrative, and that other payment tokenization systems using payment cards of different brands may be used in accordance with examples of the below disclosure. Furthermore, though the payment token is typically converted to a payment card PAN, it is to be understood that the mobile device may provide a payment card PAN directly during transactions.

In some examples, the mobile device then communicates with a server associated with and operated by the operator of a rental scheme and makes an authorizing payment to the operator of the rental scheme. The operator of the rental scheme then authorizes the rental and instructs the docking station to open a lock that is securing the bicycle, thus allowing the renter to remove the bicycle from a docking station in which it had been securely held.

Similar methods can be used in car rental schemes. For example, a renter may approach a vendor's garage at an airport and tap their mobile device against an NFC enabled car eligible for rental. The renter may launch the rental process, provide their details, digitally sign the typical rental waivers and then unlock the car on the spot, all using just their mobile device.

Hotel room rentals can also be processed using similar methods. For example, a renter may approach a room, scan a QR code or NFC tag using a mobile device and move through the check in process on the device.

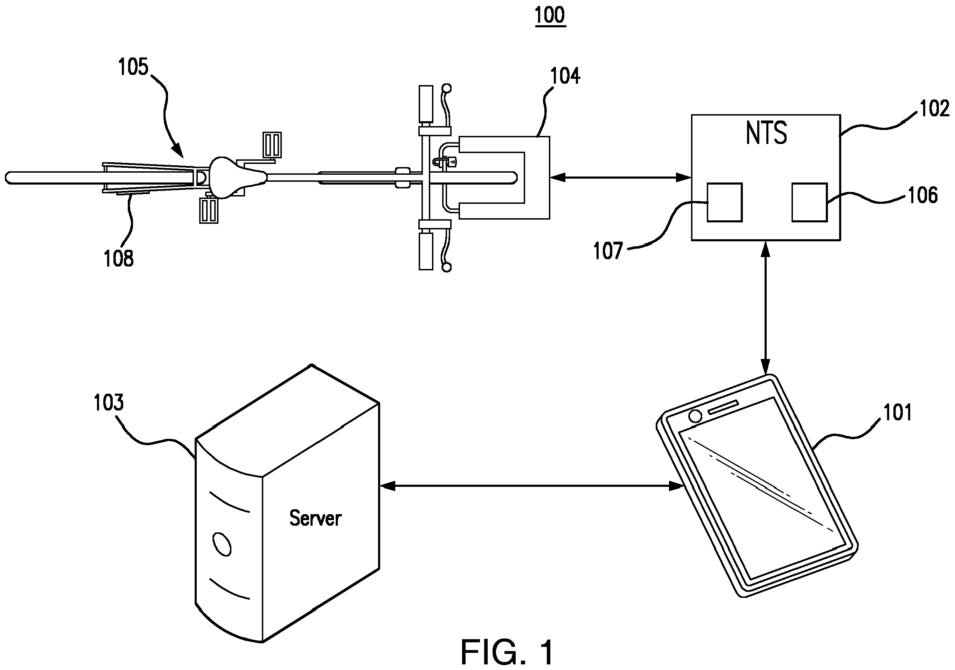

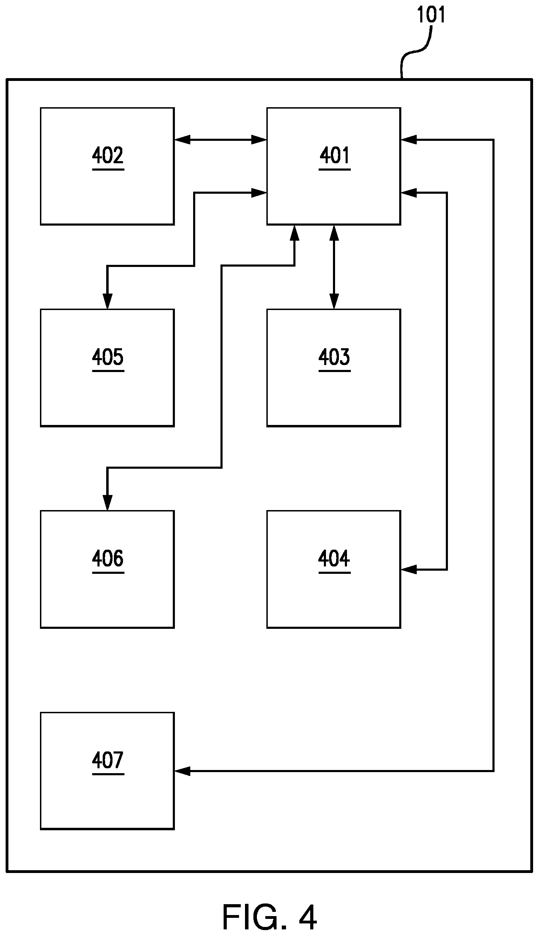

Figure 1 shows a schematic diagram of an exemplary rental system 100. The system 100 comprises a mobile device 101, which is described in greater detail with reference to Figure 4, a network terminal station (NTS) 102, a server 103 belonging to the operator of a rental scheme, a lock 104 and an asset 105.

The NTS 102 comprises a processor 106 and at least one communication node 107. The communication node 107 allows the NTS 102 to communicate wirelessly with the mobile device 101 and the lock 104. The communication node 107 may be, for instance, an internet connection or any other suitable means for sharing information wirelessly. The processor may be part of a lightweight computing unit, such as a RasberryPi™.or another form of networked microcontroller.

The server 103 is operated by the entity that operates the rental scheme. The server 103 can be used to issue rental authorizations, calculate rental costs and make rental charges to renters.

The lock 104 is operable to secure or release an asset 105. The lock 104 is in communication, directly or indirectly, with the NTS 102. The NTS 102 is operable to send a message instructing the lock 104 to open.

The NTS 102 may optionally also be operable to send a message instructing the lock 104 to close. The lock may optionally automatically close under certain operating conditions. For instance, the lock may automatically close upon receiving a portion of the asset 105 or upon the NTS receiving a further indication that the asset 105 it no longer available for use (e.g. if a bicycle were to be reported faulty, a car to have been reported involved in a collision or a hotel room to be in need of cleaning).

The asset 105 comprises an identification tag 108 which is encoded with data allowing the asset 105 to be identified. For example, the identification tag 108 could be a near field communication (NFC) tag or a quick response (QR) code.

In the example shown in Figure 1, the asset 105 is a bicycle. The identification tag 108 is an NFC tag located on part of the bicycle, such as on the saddle or the handlebars. The lock 104 forms part of a larger locking station. The locking station comprises a receiving portion in which a portion of the bicycle may be placed. When the lock 104 is closed, a bicycle in the receiving portion is secured and cannot be removed by a renter without the lock 104 being opened. The lock 104 may be a solenoid lock or another type of lock suitable for automatic operation according to the present invention.

In some examples, the lock 104 or the locking station communicate with the NTS using an internet connection. In some examples, the lock 104 or the locking station is able to identify the asset that is being secured by the lock using an identification tag 108. In some examples, the lock or locking station communicates information to the NTS regarding the asset being secured by the lock.

In other examples, the asset 105 may be another rentable object, such as another type of vehicle (e.g. a car) or a rentable space or facility (e.g. a hotel room or tanning booth).

In the case of a car, an NFC tag 108 or QR code 108 may for example be located on or in part of the car's exterior surface. The NTS 102 may be located inside the car or, in another embodiment, may be located in a parking area such as a parking space (in a car park or roadside) or garage. The lock 104 may be the car door lock, the opening of which allows a renter to enter the vehicle.

In the case of a hotel room, the identification tag 108 may be located outside of the hotel room, such as on the exterior surface of a hotel room door or the surrounding wall. The lock 108 may be a hotel door lock configured for automatic operation.

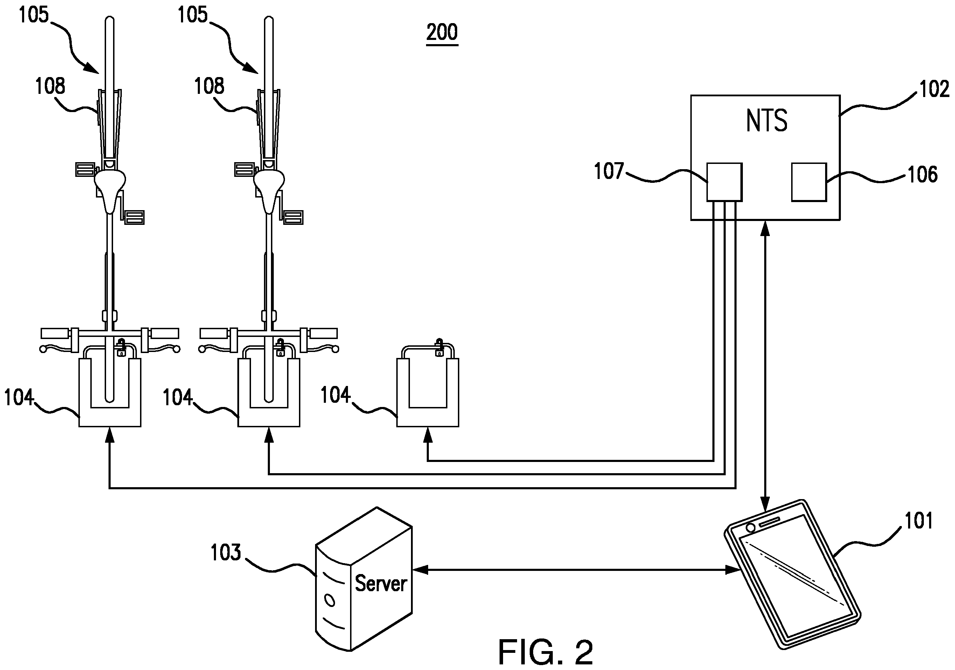

Figure 2 shows a schematic diagram of another example system 200. The system of Figure 2 comprises a number of locks 104 which are operable by the same NTS 102. Such a system is particularly suited for embodiments of the invention wherein the asset is a vehicle, such as in bicycle rental schemes.

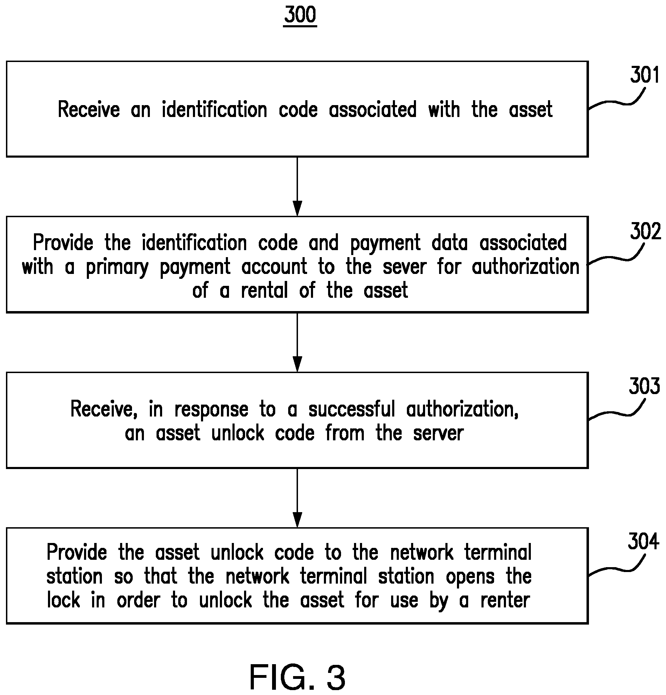

Figure 3 shows a flow diagram of an example method 300 performed by the mobile device 101.

When a renter initiates a rental transaction they first retrieve an identification code identifying the asset 105 to be rented.

The identification code can be, for example, encoded in an NFC tag attached to or comprised in the asset 105 and retrieved using NFC reading technology in the mobile device 101. The skilled reader will understand, however, that the identification code could be encoded in another suitable form, such as a QR code or any suitable optical or audible coding schema, and that the mobile device 101 may retrieve the identification code using another suitable means, such as an optical code reader, typically comprising a camera to capture the code and an app or other software to process the captured image. In the case of an audible coding schema a microphone can be used to capture an audio sequence which is then processed using an app or other software.

To retrieve the identification code, the renter positions the mobile device in the vicinity of a region of the asset 105 containing the NFC tag, which may for example be indicated visually or haptically. In step 301, the mobile device receives, e.g. via the NFC reader of the mobile device, the identification code identifying the asset 105.

In step 302, the mobile device 100 provides the identification code and a payment token to the server 103 of the rental scheme operator for authorization of a rental of the asset 105. This allows the server to determine the identities of the asset 105 to be rented and the renter that is intending to rent the asset 105 (or at least a payment account to which they have access).

The mobile device 101 and the server 103 can for example communicate via an internet connection. The mobile device 101 and the server 103 may communicate using a representational state transfer (RESTful) service or Simple Object Access Protocol (SOAP) service or another suitable data exchange protocol. Thus, in step 302 the identification code and the payment token can be provided to the server in this way.

The payment token is generated from payment (e.g. credit or debit) credentials of a payment account to which the renter has access, e.g. PAN, expiry date, and card validation code (CVC). Transactions using the payment token are made from the payment account associated with the payment card details from which the payment token is generated.

The payment card details can be entered into the mobile device 101 by the renter when the renter first makes a rental, or previously during a registration procedure for the rental scheme or general mobile device payment. The card details can then be stored on the mobile device 101 and used to generate further payment tokens for subsequent rentals.

A new payment token can be generated the first time a renter makes a rental transaction and can be reused in later transactions. Alternatively, a new payment token can be generated for every rental.

The payment token might be authorized only to make payments to the operator of the rental scheme or an associated entity.

Following receipt, the server 103 of the rental scheme operator then makes an authorization charge using the payment token. The authorization charge is typically a request for a nominal payment from the payment account associated with the payment token to a payment account associated with the operator of the rental scheme. This allows the operator of the rental scheme to verify that the payment token is a legitimate means of payment and that the associated payment account has available funds and is not blocked from making payments.

The authorization charge may for example be a minimum charge allowed using a given payment platform.

In the event that the authorization charge fails, the rental process is aborted.

In the event that the authorization charge is successfully completed, the server provides an authorization message to the mobile device 101 resulting in the mobile device 101 receiving the authorization message according to step 303.

If the mobile device 101 and the server 103 communicate via an internet connection using a RESTful service, the authorization message may be provided via the internet connection using the RESTful service.

The authorization message can include data identifying the asset 105 to be unlocked. It can optionally further include a request for the lock 104 securing the asset 105 to be opened.

In step 304, the mobile device 101 provides the authorization message (or a message derived from it) to the NTS 102. The NTS 102 receives the authorization message at the communication node 107. If the asset to be unlocked is not identified in the authorisation message, the NTS can determine an appropriate asset.

In some examples, the mobile device 101 and the NTS 102 communicate via an internet connection using a RESTful service. Thus, in step 304 the authorization message can be provided from the mobile device 101 to the NTS 102 in this way.

The NTS 102 then provides instructions to the lock 104 causing the lock 104 to open and thus release the device for use by the renter.

At a later point, the renter will conclude the rental process. The operator of the rental scheme then calculates a total cost of the rental. The server 103 belonging to the operator of the rental scheme then makes a charge to the payment account associated with the payment token, where the charge corresponds to the unpaid balance of the total cost of the rental.

In some examples, the total cost of the rental is calculated based on the total rental time during which the asset has been rented. In such a case, a rental initial time is recorded in a database when the rental begins, and a return time is recorded in the database when the rental is completed. The database may be stored in the NTS 102 or in the server 103. The total rental time, which is the difference between the initial time and the return time, is then multiplied by predetermined rental rate to determine a total rental cost. In some examples, the rental rate may differ for different segments of the journey. For example, the rental cost for the first 20 minutes of the journey may be calculated using a first tariff, while the rental cost for the remaining journey time is calculated with a second tariff.

In other examples, particularly examples where the asset is a vehicle, the total rental cost may be calculated based on the total distance of a journey. In such an embodiment, the mobile device 101 comprises a GPS system which is capable of tracking the location of the asset. In some embodiments, the user can choose whether the total cost of the rental is calculated based on the rental time or based on the journey distance. In other embodiments, an algorithm may calculate a total cost based on journey time and distance travelled.

A disadvantage of the known rental systems, particularly bicycle hire schemes, is that information relating to the rental is recorded only at the docking station terminals. Typically, this means that payment calculations can be based only on the total time that the bicycle has been removed from a docking port and not distance travelled or other metrics.

In the case in which the asset is a bicycle, the rental may be concluded when the renter returns the bicycle. In general, the renter may return the bicycle to the original lock 104 from which the rental was initiated, or the renter may return the bicycle to a different lock 104 belonging to the operator of the rental scheme. In such cases, the lock 104 or locking station may provide information to the NTS confirming that the bicycle has been returned. The NTS then provides confirmation of the return of the bicycle to the server. On receiving conformation that the bicycle has been returned, the server charges the payment account for the rental. In other examples, the NTS may provide confirmation of the return of the asset to the mobile device, which then in turn forwards the confirmation on to the server.

In other embodiments, such as the case in which the asset is a car or a hotel room, the rental may be concluded by a renter sending a message via the mobile device 101 indicating that the asset 104 is no longer being used. Alternatively, the original rental may be specified for a given amount of time, for instance an hour, and automatically conclude upon expiry of the rental period. (In this case the entire cost might be charged to the payment token up-front.)

Figure 4 shows a schematic representation of an example of a mobile device 101 suitable for performing the steps of the present invention. The mobile electronic device 101 may for example be a smartphone, tablet or another device capable of cellular or wireless communication (e.g., via Wi-Fi, GPRS, 3G or other protocols).

The mobile device 101 may be conventional in its hardware aspects but may be controlled by software to cause it to operate in accordance with aspects of the present invention.

The mobile device 101 may include a computer processor 401 operatively coupled to a number of communication nodes 402, and a storage device 403. The communication nodes 402 may include wireless network connection nodes.

The mobile device 101 may include NFC-enabling hardware 404. The mobile device 101 may also comprise a camera 405, which may be used to provide the input for a QR reader. The mobile device 101 may also include location determining hardware, such a GPS system.

The mobile device 101 may also comprise a user input interface 406 and a graphical interface 407 (which may be provided by the same user interface device, e.g. a touchscreen).

Although the present invention has been described in connection with specific exemplary embodiments, it should be understood that various changes, substitutions, and alterations apparent to those skilled in the art can be made to the disclosed embodiments without departing from the scope of the invention as set forth in the appended claims. Other embodiments will be apparent to those skilled in the art from consideration of the specification and practice of the embodiments disclosed herein. It is intended that the specification and examples be considered as exemplary only.

In addition, where this application has listed the steps of a method or procedure in a specific order, it could be possible, or even expedient in certain circumstances, to change the order in which some steps are performed, and it is intended that the particular steps of the method or procedure claims set forth herein not be construed as being order-specific unless such order specificity is expressly stated in the claim. That is, the operations/steps may be performed in any order, unless otherwise specified, and embodiments may include additional or fewer operations/steps than those disclosed herein. It is further contemplated that executing or performing a particular operation/step before, contemporaneously with, or after another operation is in accordance with the described embodiments.

The methods described herein may be encoded as executable instructions embodied in a computer readable medium, including, without limitation, non-transitory computer-readable storage, a storage device, and/or a memory device. Such instructions, when executed by a processor (or one or more computers, processors, and/or other devices) cause the processor (the one or more computers, processors, and/or other devices) to perform at least a portion of the methods described herein. A non-transitory computer-readable storage medium includes, but is not limited to, volatile memory, non-volatile memory, magnetic and optical storage devices such as disk drives, magnetic tape, CDs (compact discs), DVDs (digital versatile discs), or other media that are capable of storing code and/or data.

The methods and processes can also be partially or fully embodied in hardware modules or apparatuses or firmware, so that when the hardware modules or apparatuses are activated, they perform the associated methods and processes. The methods and processes can be embodied using a combination of code, data, and hardware modules or apparatuses.

Examples of processing systems, environments, and/or configurations that may be suitable for use with the embodiments described herein include, but are not limited to, embedded computer devices, personal computers, server computers (specific or cloud (virtual) servers), hand-held or laptop devices, multiprocessor systems, microprocessor-based systems, set top boxes, programmable consumer electronics, mobile telephones, network PCs, minicomputers, mainframe computers, distributed computing environments that include any of the above systems or devices, and the like. Hardware modules or apparatuses described in this disclosure include, but are not limited to, application-specific integrated circuits (ASICs), field-programmable gate arrays (FPGAs), dedicated or shared processors, and/or other hardware modules or apparatuses.

Receivers and transmitters as described herein may be standalone or may be comprised in transceivers. User input devices can include, without limitation, microphones, buttons, keypads, touchscreens, touchpads, trackballs, joysticks and mice. User output devices can include, without limitation, speakers, graphical user interfaces, indicator lights and refreshable braille displays. User interface devices can comprise one or more user input devices, one or more user output devices, or both.

Furthermore, it will be appreciated by the person skilled in the art that references to payment cards should be construed to comprise mobile devices having electronic wallets contained therein wherein the payment is made either via an application on the mobile device or via an NFC or other contactless communications protocol, or a contactless enabled payment card.

## Claims

1. A method, performed by an electronic device, of initiating release of an asset which is secured with a lock, the lock being operated by a network terminal station capable of receiving data from the electronic device, the method comprising:
receiving an identification code associated with the asset;
providing the identification code and payment data associated with a primary payment account to a server for authorization of a rental of the asset;
receiving, in response to a successful authorization, an asset unlock code from the server;
providing the asset unlock code to the network terminal station so that the network terminal station opens the lock in order to unlock the asset for use by a renter.

2. The method of claim 1, further comprising:
receiving an asset return message from the network terminal station after the asset has been returned by the renter; and
upon receiving the asset return message, sending a rental complete message to the server to indicate that the asset has been returned by the renter and that a primary payment account associated with the payment data may be charged for the rental.

3. The method of any preceding claim, wherein the payment data is a payment token.

4. The method of any previous claim, wherein
the network terminal station comprises a plurality of locks, each of which secures one of a plurality of assets, each of which has an asset identification code.

5. The method of any previous claim, wherein
the step of providing the asset unlock code to the network terminal station includes providing the asset identification code to the network terminal station, wherein the asset identification code identifies which asset is to be unlocked.

6. The method of any previous claim, wherein
the asset unlock code identifies which asset is to be unlocked by the network terminal station.

7. The method of any preceding claim; wherein
the first identification is received from either an NFC tag associated with the first asset or a QR code associated with the first asset.

8. The method of any of claims 3-7; further comprising
creating the payment token based on a payment card belonging to the renter.

9. The method of any of claims 3-8, wherein
the payment token is authorized only to make payments in relation to a rental of the asset

10. The method of any preceding claim, wherein
the asset is a vehicle.

11. A mobile device comprising a processor configured to perform the method of any preceding claim.

12. A method, performed by a network terminal station, of initiating release of an asset which is secured with a lock, the method comprising:
receiving an asset unlock code from a mobile device, the asset unlock code identifying the asset that is secured by the lock and providing confirmation that a rental of the asset has been authorized, and sending an unlock signal to the lock instructing the lock to open in order to release the asset.

13. The method of claim 12, further comprising:
receiving an indication from the lock that the asset has been returned to the lock; and
sending an asset return message to a server confirming that the asset has been returned.

14. A network terminal station comprising:
at least one communication node configured to communicate with an electronic device and further configured to communicate with at least one lock in order to initiate the release of an asset secured by the lock; and
a processor configured to perform steps comprising:
receiving an asset unlock code from a mobile device, the asset unlock code identifying the asset that is secured by the lock and providing confirmation that a rental of the asset has been authorized, and
sending an unlock signal to the lock instructing the lock to open in order to release the asset.

15. The network terminal station of claim 14, wherein the steps further comprise:
receiving an indication from the lock that the asset has been returned to the lock; and
sending an asset return message to a server confirming that the asset has been returned.
